(19) Europäisches Patentamt
European Patent Office
Office européen des brevets

(11) Veröffentlichungsnummer: **0 049 761**
**A1**

(12) # EUROPÄISCHE PATENTANMELDUNG

(21) Anmeldenummer: **81107021.8**

(22) Anmeldetag: **07.09.81**

(51) Int. Cl.³: **C 09 K 5/00**
**C 08 J 3/24**

(30) Priorität: **15.10.80 DE 3038844**

(43) Veröffentlichungstag der Anmeldung:
**21.04.82 Patentblatt 82/16**

(84) Benannte Vertragsstaaten:
**AT BE CH DE FR GB IT LI LU NL SE**

(71) Anmelder: **Goerig & Co. GmbH & Co. KG**
**Industriestrasse 3**
**D-6800 Mannheim 1(DE)**

(72) Erfinder: **Michel, Heinz, Dipl.-Ing.**
**Lilienstrasse 42**
**D-6901 Bammental(DE)**

(74) Vertreter: **Ratzel, Gerhard, Dr.**
**Seckenheimer Strasse 36a**
**D-6800 Mannheim 1(DE)**

(54) **Verwendung eines ternären Salzgemisches zur Wärmeübertragung und/oder als Wärmespeicher.**

(57) Die Erfindung betrifft die Verwendung eines ternären Salzgemisches zur Wärmeübertragung und/oder als Wärmespeicher, wobei man ein ternäres Salzgemisch aus Kalziumnitrat Ca $(NO_3)_2$, gegebenenfalls mit Kristallwasser, Kaliumnitrat $KNO_3$ und Natriumnitrat $NaNO_3$ einsetzt. Gemäß einer bevorzugten Ausführungsform besteht das ternäre Salzgemisch aus 44 Gew.-% Kalziumnitrat Ca $(NO_3)_2$, 44 Gew.-% Kaliumnitrat $KNO_3$ und 12 Gew.-% Natriumnitrat $NaNO_3$. Eine weitere bevorzugte Ausführungsform des ternären Salzgemisches besteht aus 53 Gew.-% Kalziumnitrat mit Kristallwasser $Ca(NO_3)_2 \cdot 4\ H_2O$, 37 Gew.-% Kaliumnitrat $KNO_3$ und 1o Gew.-% Natriumnitrat $NaNO_3$. Bevorzugte Anwendungsweisen des ternären Salzgemisches sind solche beim Vulkanisieren von vulkanisierbaren Gegenständen, sowie zur Wärmeübertragung in Leitungen und Rohren und zur Wärmespeicherung.

EP 0 049 761 A1

Die Erfindung betrifft die Verwendung eines ternären Salzgemisches zur Wärmeübertragung und/oder als Wärmespeicher.

Salzschmelzen werden eingesetzt als Wärmeträger- bzw. Wärmespeichersalze und als Vulkanisiersalze.

Um z.B. bei chemischen Prozessen eine bestimmte Temperatur zu halten oder auf eine genaue Temperatur zu erwärmen, werden oft, vor allem bei höheren Temperaturen, Salzschmelzen als Wärmeübertragungsmedien eingesetzt. Hier hat sich hauptsächlich eine Salzmischung mit der Zusammensetzung

| | |
|---|---|
| Kaliumnitrat $KNO_3$ | 53 Gew.-% |
| Natriumnitrat $NaNO_3$ | 7 Gew.-% |
| Natriumnitrit $NaNO_2$ | 4o Gew.-% |

durchgesetzt.

Diese Salzschmelze hat den Nachteil, daß sie von Zeit zu Zeit ausgetauscht oder regeneriert werden muß, da durch Oxidieren des $NaNO_2$-Anteils, - es entsteht $NaNO_3$-, eine dauernde Änderung der Schmelze hervorgerufen wird, die mit einem Anstieg der Schmelztemperatur gekoppelt ist. Der Schmelzpunkt

der Ausgangsmischung beträgt 140°C. Er kann durch die beschriebene Reaktion mit der Zeit auf 200°C erhöht werden.

Entscheidend für die noch zulässige Schmelztemperatur ist die Temperatur, die im Vorrats-Tank erreicht werden kann; denn bei einem Störfall in der Anlage wird die gesamte Salzschmelze in den Tank abgelassen. Sie muß dort flüssig gehalten werden, da sie im erstarrten Zustand nicht mehr aus dem Tank zu entfernen ist. Die Folgen brauchen nicht weiter erklärt zu werden.

Man ist teilweise dazu übergegangen, die Schmelze mit Stickstoff zu überlagern, um die Reaktion (1)

$$2\ Na\ NO_2 + O_2 \longrightarrow 2\ Na\ NO_3 \qquad (1)$$

zu unterbinden.

Bei Temperaturen ab 300°C bedingt jedoch die Überlagerung der Schmelze mit Stickstoff eine Disproportionierung des $Na\ NO_2$ zu Nitrat, $Na_2O$ und Stickstoff:

$$5\ Na\ NO_2 \longrightarrow 3\ Na\ NO_3 + Na_2O + N_2 \qquad (2)$$

Diese Reaktion verläuft wesentlich langsamer als die Oxidation des Nitrits; durch das gebildete $Na_2O$ entstehen jedoch erhebliche korrosionsbedingte Anforderungen an das Material der Anlage.

Um Gummi innerhalb eines großen Temperaturbereiches ( -60°C bis 100°C ) elastisch zu halten, muß es vulkanisiert werden. Man vermischt dazu den Rohkautschuk mit feinverteiltem Schwefel und einigen anderen Kautschuk-Hilfsstoffen. Diese vulkanisationsfähige Mischung wird dann auf Kalandern, Extrudern, Spritzpressen, Streichmaschinen u.a. weiter verarbeitet. Der Vulkanisationsprozeß geht bei 100 - 180°C vonstatten, und zwar entweder direkt bei der in der Hitze erfolgenden Formgebung der Vormischung, z.B. in beheitzten Formen unter Druck oder durch nachträgliches Erhitzen in Dampf, Heißluft oder Salzschmelzen. Man benutzt mittlerweile auch Mikrowellen zum Erwärmen des Gummis auf Vulkanisationstemperatur. Bei Teilen mit stark unterschiedlichen Querschnitten kann diese Methode jedoch nicht angewendet werden.

Die Vulkanisation im Salzbad hat sich vor allem bei

der kontinuierlichen Erzeugung von Band- und Profilgummi durchgesetzt, da die Salzschmelze eine gleichmäßige Durchwärmung bei genau einzuhaltenden Temperaturen garantiert.

Die oben genannte Salzmischung wird auch hier benutzt. Da nach dem Vulkanisieren erhebliche Salzmengen an den Gummiteilen hängenbleiben, müssen diese in Wasser gewaschen werden. Hier bringt der Nitritanteil des Salzgemisches erhebliche Umweltprobleme mit sich.

Salzschmelzen gemäß dem bisherigen Stand der Technik weisen weiterhin den Nachteil eines hohen Schmelzpunktes ($\geq$ 140°C) auf, und müssen somit bei hoher Temperatur verwendet werden.

Demgegenüber liegt vorliegender Erfindung die Aufgabe zugrunde, eine nitritfreie Salzschmelze zu liefern, die keine Korrosionsprobleme durch $Na_2O$-Entstehung bietet, die die Umweltbelastung durch Nitrit vermeidet, die bei niedriger Temperatur schmilzt und gegebenenfalls geringeren Energieverbrauch bedingt, leichter handhabbar ist und günstiger für

das Verfahren, da sie eine längere Abtropfzeit bis zum Erstarren der Schmelze ermöglicht, und die stabil ist bezüglich Oxidation und Zersetzung.

Diese Aufgabe wird erfindungsgemäß bei einem Verfahren der eingangs genannten Gattung dadurch gelöst, daß man ein ternäres Salzgemisch aus Kalziumnitrat Ca $(NO_3)_2$, gegebenenfalls mit Kristallwasser, Kaliumnitrat $KNO_3$ und Natriumnitrat Na $NO_3$, einsetzt.

In einer besonderen Ausführungsform wird ein ternäres Gemisch aus 44 Gew.-% Kalziumnitrat Ca $(NO_3)_2$, 44 Gew.-% Kaliumnitrat $KNO_3$ und 12 Gew.-% Natriumnitrat $NaNO_3$ eingesetzt.

In einer weiteren besonderen Ausführungsform wird ein ternäres Salzgemisch aus 53 Gew.-% Kalziumnitrat mit Kristallwasser Ca $(NO_3)_2 \cdot 4\, H_2O$, 37 Gew.-% Kaliumnitrat $KNO_3$ und 1o Gew.-% Natriumnitrat Na $NO_3$ eingesetzt.

Eine erfindungsgemäße kennzeichnende Verwendung ist das Vulkanisieren von vulkanisierbaren Gegenständen.

Eine weitere kennzeichnende Verwendung ist die Wärmespeicherung in Leitungen und Rohren.

Die neue Mischung ist nitritfrei; dadurch entfallen Umweltprobleme beim Waschen der mit dieser Salzmischung behafteten Gegenstände.

Die neue Mischung hat einen tieferen Schmelzpunkt als die bisher übliche Salzschmelze, wodurch sich die Zeit, in der die Salzschmelze abtropfen kann, verlängert. Dies wiederum beeinflußt positiv den Salzverbrauch sowie die Belastung des Waschwassers.

Da die neue Mischung nitritfrei ist, findet keine Oxidationsreaktion (1) oder Zersetzungsreaktion (2) statt und somit auch keine unerwünschte Erhöhung des Schmelzpunktes.

Das Wesen der Erfindung wird im folgenden näher erläutert, ohne daß dadurch die Erfindung eingeschränkt wird.

Der Schmelzpunkt der Salzmischung ist beim ersten Einschmelzen etwa 130°C. Wird das Hydrat benutzt, so liegt der Schmelzpunkt bei ca. 80°C. War die

Salzschmelze einmal eingeschmolzen, so hat sie keinen definierten Schmelzpunkt mehr, sondern geht mit sinkender Temperatur in einen hochviskosen, später plastischen und dann festen Zustand über. Die erstarrte Schmelze besteht aus einem homogenen, amorphen, durchsichtigen glasähnlichen Stoff.

Hält man die Schmelze wasserfrei, so kann mit ihr bis ca. 120°C herab gearbeitet werden. Durch Wasserzugabe bzw. beim Arbeiten mit $Ca(NO_3)_2 \cdot 4\ H_2O$ sind jedoch Arbeitstemperaturen bis ca 60°C herab zu erreichen.

Die Schmelze kann als Wärmeträger- bzw. Wärmespeichersalz und als Vulkanisiersalz benutzt werden.

## Ansprüche

1. Verwendung eines ternären Salzgemisches zur Wärmeübertragung und/oder als Wärmespeicher, dadurch gekennzeichnet, daß man ein ternäres Salzgemisch aus Kalziumnitrat Ca $(NO_3)_2$, gegebenenfalls mit Kristallwasser, Kaliumnitrat $KNO_3$ und Natriumnitrat $NaNO_3$ einsetzt.

2. Verwendung nach Anspruch 1, dadurch gekennzeichnet, daß man ein ternäres Salzgemisch aus 44 Gew.-% Kalziumnitrat Ca $(NO_3)_2$, 44 Gew.-% Kaliumnitrat $KNO_3$ und 12 Gew.-% Natriumnitrat $NaNO_3$ einsetzt.

3. Verwendung nach Anspruch 1, dadurch gekennzeichnet, daß man ein ternäres Salzgemisch aus 53 Gew.-% Kalziumnitrat mit Kristallwasser $Ca(NO_3)_2 \cdot 4\ H_2O$, 37 Gew.-% Kaliumnitrat $KNO_3$ und 1o Gew.-% Natriumnitrat $NaNO_3$ einsetzt.

4. Verwendung nach Ansprüchen 1 bis 3 beim Vulkanisieren von vulkanisierbaren Gegenständen.

5. Verwendung nach Ansprüchen 1 bis 3 zur Wärmeübertragung in Leitungen und Rohren.

6. Verwendung nach Ansprüchen 1 bis 3 zur Wärmespeicherung.

0049761

EP 81107021.8

Europäisches Patentamt

# EUROPÄISCHER RECHERCHENBERICHT

| EINSCHLÄGIGE DOKUMENTE | | | KLASSIFIKATION DER ANMELDUNG (Int. Cl.) |
|---|---|---|---|
| Kategorie | Kennzeichnung des Dokuments mit Angabe, soweit erforderlich, der maßgeblichen Teile | betrifft Anspruch | |
| | DE - A1 - 2 639 173 (THE UNIVERSITY OF DELAWARE)<br>* Seite 5, Zeilen 1-27 *<br>--<br>US - A - 2 375 760 (F.C. FAHNESTOCK)<br>* Patentansprüche 1-5; Seite 1, rechte Spalte, Zeilen 41-60; Seite 2, linke Spalte, Zeilen 1-7 *<br>---- | 1-3<br><br><br><br>1 | C 09 K 5/00<br>C 08 J 3/24 |
| | | | RECHERCHIERTE SACHGEBIETE (Int. Cl.) |
| | | | C 09 K<br>C 08 J |
| | | | KATEGORIE DER GENANNTEN DOKUMENTE<br>X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument<br>&: Mitglied der gleichen Patentfamilie, übereinstimmendes Dokument |
| X | Der vorliegende Recherchenbericht wurde für alle Patentansprüche erstellt. | | |

| Recherchenort | Abschlußdatum der Recherche | Prüfer |
|---|---|---|
| WIEN | 30-11-1981 | PILLERSTORFF |